# EUROPÄISCHE PATENTSCHRIFT

(11) **EP 3 164 626 B1**
(45) Veröffentlichungstag und Bekanntmachung des Hinweises auf die Patenterteilung: **11.12.2019**
(21) Anmeldenummer: 15734145.4
(22) Anmeldetag: 03.07.2015
(51) Int. Cl.: F16K 5/04, F16K 5/12

(54) **LINEARES REGELVENTIL**
LINEAR CONTROL VALVE
SOUPAPE DE RÉGLAGE LINÉAIRE

(30) Priorität: 04.07.2014 AT 504672014
(43) Veröffentlichungstag der Anmeldung: 10.05.2017
(73) Patentinhaber: AVL List GmbH, 8020 Graz (AT)
(72) Erfinder: EITZINGER, Johann, 8010 Graz (AT); GRUBER, Hannes, 5582 St. Michael (AT); MONSCHEIN, Martin, 7564 Dobersdorf (AT)
(74) Vertreter: Patentanwälte Pinter & Weiss OG
(86) Internationale Anmeldenummer: PCT/EP2015/065183
(87) Internationale Veröffentlichungsnummer: WO 2016/001401

(56) Entgegenhaltungen:
- EP-A1- 0 515 965
- EP-A1- 2 695 816
- DE-A1-102012 110 872
- JP-A- 2003 184 757
- US-A- 5 108 075
- US-A- 5 834 654

## Beschreibung

Die gegenständliche Erfindung betrifft ein Regelventil mit einem Ventilgehäuse mit einer Einlassöffnung und einer Auslassöffnung, die durch einen Strömungskanal verbunden sind, wobei im Strömungskanal ein verdrehbar gelagerter zylindrischer Ventilkörper angeordnet ist und die Drehachse des Ventilkörpers normal zur Längsachse des Strömungskanals angeordnet ist und wobei im Ventilkörper eine Ausnehmung vorgesehen ist, die einen durch den Ventilkörper durchgehenden Regelkanal ausbildet, der die Mantelfläche des Ventilkörpers schneidet und am Ventilkörper ein Verschlusssteg ausgebildet ist, der in der geschlossen Stellung des Regelventils den Strömungskanal zumindest zum Teil verschließt, und der Regelkanal geformt ist, um bei Verdrehung des Ventilkörpers zwischen einer ersten, von der geschlossen Stellung verschiedenen Ventilstellung und einer zweiten Ventilstellung mit einem größeren Durchfluss als in der ersten Ventilstellung einen im Wesentlichen linearen Zusammenhang zwischen Ventilstellung und Durchfluss zu erzielen. Weiters betrifft die Erfindung einen hydrodynamischen Drehmomentenerzeuger mit einem solchen Regelventil am Auslass und ein Verfahren zur Regelung eines hydrodynamischen Drehmomentenerzeugers mit einem solchen Regelventil am Auslass.

In vielen Anwendungsbereichen werden sogenannte Wasserbremsen als Widerstand zur Erzeugung eines Belastungsdrehmoments für eine Antriebseinheit eingesetzt, insbesondere als Belastungsaggregat zum Testen solcher Antriebseinheiten oder Antriebssträngen mit Antriebseinheiten, wie beispielsweise ein Verbrennungsmotor, ein Antriebsstrang mit Verbrennungsmotor, ein Hybridantriebsstrang, etc. Solche Wasserbremsen gehen z.B. aus der US 5,834,654 A oder der US 4,020,684 A hervor. Die WO 2012/175337 A1 beschreibt eine Wasserbremse als Belastungsaggregat auf einem Prüfstand für Verbrennungskraftmaschinen.

Das Belastungsdrehmoment eines solchen hydrodynamischen Drehmomentenerzeugers (Wasserbremse) wird im Wesentlichen über den Durchfluss des Betriebsmediums, in der Regel Wasser, durch den Drehmomentenerzeuger geregelt. Hierzu sind normalerweise ein Einlassventil und ein Auslassventil angeordnet, über die der Durchfluss durch den Drehmomentenerzeuger geregelt wird, siehe z.B. US 5,834,654 A.

Bei der Regelung des Auslaufes des Betriebsmediums aus dem Drehmomentenerzeuger besteht das Hauptproblem in der anwendungsbedingt extrem niedrigen verfügbaren Druckdifferenz zwischen dem Innenraum des Drehmomentenerzeugers und dem Abfluss. Regelventile für diese Anwendung sind typischerweise als "Butterfly" Ventile mit drehbarer Drosselklappe ausgeführt, wie auch in der US 5,834,654 A oder US 4,020,684 A gezeigt. Diese Ausführung kann zwar sehr kompakt ausgeführt werden, der lineare Stellbereich solcher Ventile, also der Bereich in dem sich ein linearer Zusammenhang zwischen Verstellung des Ventilkörpers (Drehwinkel) und Durchfluss (Kennlinie) ergibt, ist jedoch konstruktionsbedingt gering, was die Regelung solcher Ventile zur Einstellung eines gewünschten Durchflusses aufwendiger macht.

Handelsübliche Linearventile arbeiten mit einer Regelblende, welche den maximal verfügbaren Öffnungsquerschnitt künstlich reduzieren und somit die erreichbaren Durchflusskennwerte herabsetzen bzw. die erforderliche Druckdifferenz erhöhen, um eine lineare Kennlinie zu erhalten. Ein solches Ventil ist z.B. in der EP 269 280 B1 oder der WO 2006/015220 A2 beschrieben. Der Nachteil von Ventilen mit Regelblende ist der erhöhte Durchflusswiederstand, der sich durch den Einsatz der Regelblende ergibt. Es kann somit bei gegebener (niedriger) Druckdifferenz weniger Wasser ausströmen als mit einem Ventil welches vollständig öffnet. Der Einsatz eines "entsprechend größeren" Ventiles würde den erforderlichen Bauraum vergrößern, welcher aber oftmals nicht zur Verfügung steht. Auch sind die handelsüblichen Ventile (z.B. ein Regelkugelhahn Ventil) vollkommen dichtend, was für die spezielle Anwendung an einem hydrodynamischen Drehmomenterzeuger nicht vorteilhaft ist. Analoges gilt im Wesentlichen für handelsübliche, lineare Regelventile welche einen zylindrischen Drosselkörper besitzen.

Ventile mit längsverstellbarem Drosselkörper, z.B. in Form eines Ventilkegels, sind typischerweise weniger kompakt aufgebaut und erfordern üblicherweise eine mechanische Umwandlung einer Rotationsbewegung (Antriebsmotor) in eine lineare Bewegung des Drosselkörpers. Pneumatische Linearantriebe für solche Ventile erreichen die geforderte Verstellgeschwindigkeit normalerweise nicht, bzw. nur mit erheblichem Aufwand. Ein elektrischer Linearantrieb für derartige Anwendungen besteht typischerweise aus einem Servomotor mit angebautem Spindelschlitten, welcher die Drehbewegung in eine lineare Bewegung umsetzt. Diese Ausführung ist neben dem erhöhten Bauraum ein zusätzlicher Serviceteil, welcher einem Verschleiß unterliegt und daher ein zusätzlicher, unerwünschter Kostenfaktor. Ein Linearantrieb ohne Bewegungsumwandlung wäre z.B. eine Spule mit Tauchanker, welcher in der Position geregelt wird. Diese Art von Linearantrieben ist aber am Markt nicht so verbreitet wie klassische Servoantriebe und somit kostenmäßig nicht konkurrenzfähig.

Aus der DE 10 2010 041 704 A1 geht ein Regelventil zur Regelung eines Volumenstroms hervor, das einen in einer Rohrleitung angeordneten zylindrischen Ventilkörper mit einer Ausnehmung aufweist. Durch Verdrehen des Ventilkörpers in der Rohrleitung verändert sich der freie Strömungsquerschnitt im Ventil und damit der Volumenstrom durch das Regelventil. Solche Regelventile zeigen in der Regel ein (hochgradig) nichtlineares Verhalten und eignen sich daher nur begingt für eine genaue Regelung eines Volumenstromes bzw. wird eine solche Regelung aufwendig.

Die DE 43 19 015 A1 zeigt wiederum ein Regelventil mit einer Drosselklappe. Zur Linearisierung des Zusammenhangs zwischen Durchfluss und Stellung der Drosselklappe wird hier die innere Form des Ventilgehäuses im Bereich der Drosselklappe speziell geformt. Damit lässt sich aber nur eine Linearisierung am Beginn des Stellbereichs, also beginnend mit der geschlossenen Stellung bis zu einem bestimmen Verstellwinkel, realisieren, wobei der mögliche linearisierbare Stellbereich aus konstruktiven Gründen sehr begrenzt ist.

Aus der EP 515 965 A1, der EP 2 695 816 A1 und der US 5,108,975 A sind lineare Regelventile bekannt mit einem linearen Zusammenhang zwischen Ventilstellung und Durchfluss. Diese Regelventile haben jedoch allesamt einen relativ kleinen Verstellbereich, was die Regelung des Durchflusses über einen großen Bereich erschwert.

Hydrodynamische Drehmomentenerzeuger müssen aber in der Regel in der Lage sein, einen großen Drehmomentenbereich genau einstellen zu können, was einen großen Stellbereich des Regelventils erfordert. Der interessante Betriebsbereich solcher Drehmomentenerzeuger liegt zwischen einem minimalen, von Null verschiedenen Drehmoment und einem maximalen Drehmoment. Damit sind die Maßnahmen zur Linearisierung wie in der DE 43 19 015 A1 beschrieben für ein Regelventil für einen hydrodynamischen Drehmomentenerzeuger ungeeignet bzw. nicht zielführend, da aufgrund des sehr kleinen linearen Stellbereichs eine genaue Einstellung eines Drehmoments praktisch unmöglich ist.

Es ist eine Aufgabe der gegenständlichen Erfindung, ein kompakt aufgebautes, einfaches und robustes Regelventil für einen hydrodynamischen Drehmomentenerzeuger anzugeben, das über einen weiten Stellbereich linear ist.

Diese Aufgabe wird erfindungsgemäß dadurch gelöst, dass ein Zuströmquerschnitt zum Ventilkörper kleiner ist, als ein Abströmquerschnitt vom Ventilkörper, sodass der Verschlusssteg beim Verdrehen des Ventilkörpers durch den Strömungskanal drehbar ist und dabei der Durchfluss beim Verdrehen weiter linear zu- oder abnimmt. Das ermöglicht es im besonders interessanten Stellbereich, zwischen einer ersten Ventilstellung ungleich der geschlossen Stellung und einer zweiten Ventilstellung, eine lineare Kennlinie zu erzielen, die die Regelung des Regelventils erheblich erleichtert. Dadurch, dass lediglich der Regelkanal entsprechend geformt werden muss, ergibt sich ein einfaches, kompaktes und robustes Regelventil mit wenigen Bauteilen. Außerdem ist ein solches Regelventil auch sehr flexibel, da das Regelventil alleine durch Austausch des Ventilkörpers einfach und schnell an unterschiedliche Gegebenheiten, insbesondere unterschiedliche geforderte Durchflussbereiche, angepasst werden kann. Nicht zuletzt kann dadurch ein besonders großer möglicher Stellbereich des Regelventils erreicht werden.

Eine klar definierte geschlossen Stellung des Regelventils ergibt sich, wenn am Ventilkörper ein Verschlusssteg vorgesehen ist, der in der geschlossen Stellung des Regelventils den Strömungskanal zumindest zum Teil verschließt. Wird der Strömungskanal nicht zur Gänze verschlossen, so ergibt sich in der geschlossen Stellung eine gewisse Leckagemenge, was insbesondere für ein Regelventil für einen hydrodynamischen Drehmomentenerzeuger vorteilhaft ist, da damit auch in der geschlossen Stellung für einen Durchfluss durch den hydrodynamischen Drehmomentenerzeuger gesorgt wird, wodurch einer mögliche Überhitzung des Rotors des Drehmomentenerzeugers vorgebeugt werden kann.

Wenn am Ventilkörper diametral gegenüber dem Verschlusssteg eine Verbindungsbrücke angeordnet ist, wird einerseits die mechanische Festigkeit des Ventilkörpers erhöht und andererseits der mögliche Stellbereich des Regelventils maximiert.

Die Abströmverhältnisse am Ventilkörper können verbessert werden, wenn in der Verbindungsbrücke eine Ausnehmung vorgesehen ist, da dadurch das Betriebsmedium weniger umgelenkt werden muss und sich geringere Verwirbelungen ergeben..

In der geschlossen Stellung kann auf einfache Weise eine definierte Leckagemenge erzielt werden, wenn der Ventilkörper zur Ausbildung eines durchströmbaren Radialspaltes im Bereich der Mantelfläche zumindest teilweise radial beabstandet vom Ventilgehäuse angeordnet ist. Die Größe des Radialspaltes definiert dann die erreichbare Leckagemenge.

Um eine Leckagemenge gezielt über die Mantelfläche des Ventilkörpers zu leiten, kann zumindest an einem axialen Ende der Mantelfläche ein aus der Mantelfläche radial hervortretender Umfangssteg angeordnet sein.

Zur Regelung eines hydrodynamischen Drehmomentenerzeugers ist es besonders vorteilhaft, wenn am Einlass des Drehmomentenerzeugers mittels einer drehzahlgeregelten Pumpe eine dem Drehmomentenerzeuger zugeführte Menge an Betriebsmedium geregelt wird und am Auslass mittels des Regelventils die vom Drehmomentenerzeuger abfließende Menge an Betriebsmedium geregelt wird, sodass sich im Drehmomentenerzeuger ein Pegelstand an Betriebsmedium einstellt, der das gewünschte Belastungsdrehmoment bewirkt. Die Regelung der Drehzahl der drehzahlgeregelten Pumpe ermöglicht eine präzisere und auch schnellere Steuerung des Zulaufes von Betriebsmedium und damit auch eine schnellere Regelung des Pegelstandes und damit auch des Belastungsdrehmoments.

Die gegenständliche Erfindung wird nachfolgend unter Bezugnahme auf die Figuren 1 bis 14 näher erläutert, die beispielhaft, schematisch und nicht einschränkend vorteilhafte Ausgestaltungen der Erfindung zeigen. Dabei zeigt
Fig.1 einen Schnitt durch ein erfindungsgemäßes Regelventil,
Fig.2 eine isometrische Darstellung eines Ventilkörpers des Regelventils,
Fig.3 einen Längsschnitt durch das Regelventil in geschlossen Stellung,
Fig.4 einen Längsschnitt durch das Regelventil in offen Stellung,
Fig.5 eine sich typisch ergebende lineare Kennlinie eines erfindungsgemäßen Regelventils,
Fig.6 eine Abwicklung der Mantelfläche des Ventilkörpers mit einem Regelkanal,
Fig.7 eine isometrische Darstellung eines Ventilkörpers des Regelventils in einer alternativen Ausgestaltung,
Fig.8 eine Abwicklung der Mantelfläche dieses Ventilkörpers mit einem Regelkanal,
Fig.9 eine Darstellung eines Ventilkörpers ohne Verbindungsbrücke,
Fig.10 der Verstellbereich eines Ventilkörpers ohne Verschlussbereich,
Fig.11 eine Abwicklung der Mantelfläche eines Ventilkörpers ohne Verbindungsbrücke und einem Verstellbereich von ungefähr 280°,
Fig.12 eine Abwicklung der Mantelfläche eines Ventilkörpers mit Verbindungsbrücke und einem Verstellbereich von ungefähr 220°,
Fig.13 ein erstes Regelkonzept eines hydrodynamischen Drehmomentenerzeugers mit erfindungsgemäßen Regelventil und
Fig.14 ein weiteres Regelkonzept eines hydrodynamischen Drehmomentenerzeugers mit erfindungsgemäßen Regelventil.

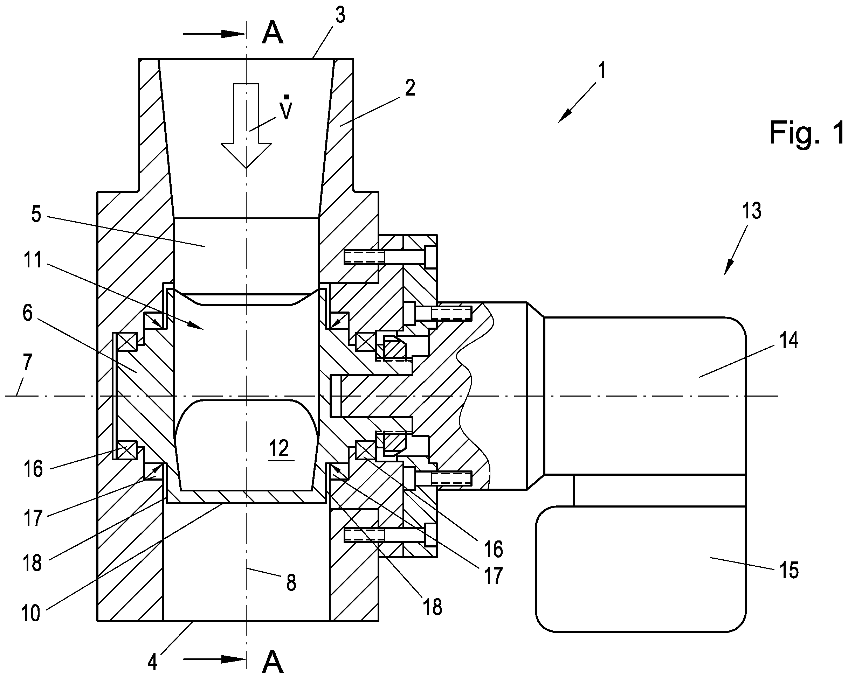

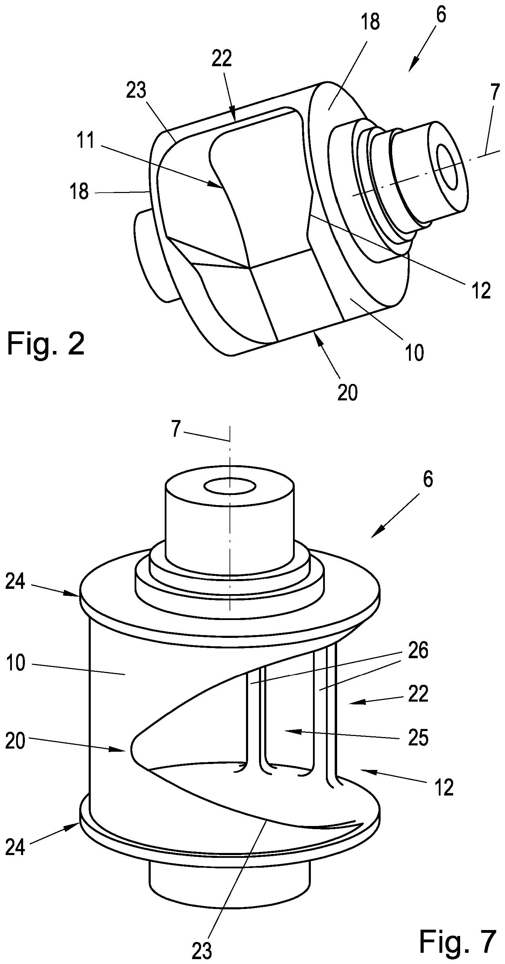

Das erfindungsgemäße Regelventil 1, wie in Fig.1 dargestellt, besteht aus einem Ventilgehäuse 2 mit einer Einlassöffnung 3 und einer Auslassöffnung 4, an die jeweils in geeigneter Weise nicht dargestellte Rohrleitungen für den Zu- bzw. Ablauf von Betriebsmedium angeschlossen werden können. Ein Auslass eines hydrodynamischen Drehmomentenerzeugers wäre z.B. mit einer Rohrleitung, oder auch direkt, mit der Einlassöffnung 3 des Regelventils 1 verbunden. Die Einlassöffnung 3 und die Auslassöffnung 4 sind durch einen durchgehenden Strömungskanal 5 verbunden, durch den im Betrieb des Regelventils 1 ein Betriebsmedium, in der Regel Wasser, von der Einlassöffnung 3 zur Auslassöffnung 4 mit einem bestimmten, von der Stellung des Regelventils 1 abhängigen Durchfluss V durchströmt (wie durch den Pfeil angedeutet). Im Ventilgehäuse 2 ist im Strömungskanal 5 ein zylindrischer Ventilkörper 6 drehbar gelagert angeordnet. Die Drehachse 7 des Ventilkörpers 6, die mit der Längsachse des Ventilkörpers 6 zusammenfällt, ist im Wesentlichen normal auf die Längsachse 8 des Strömungskanals 5 angeordnet. Der Ventilkörper 6 ist in Fig.2 im Detail dargestellt und es wird im Folgenden parallel auch auf die Fig.2 Bezug genommen.

Wie bei solchen Regelventilen 1 in Form eines Zylinderventils üblich, ist die äußere, zylindrische Mantelfläche 10 des Ventilkörpers 6 im Strömungskanal 5 angeordnet. Im Ventilkörper 6 ist eine Ausnehmung 11 angeordnet, die im Ventilkörper 6 einen durch den Ventilkörper 6 durchgehenden, durchströmbaren Regelkanal 12 ausbildet. Der Regelkanal 12 ist im Wesentlichen quer zur Drehachse 7 des Ventilkörpers 6 ausgerichtet und schneidet die Mantelfläche 10 des Ventilkörpers 6 an gegenüberliegenden Seiten des Ventilkörpers 6. Das Betriebsmedium kann daher den Regelkanal 12 im Ventilkörper 6 durchströmen. Der Regelkanal 12 definiert damit den sich je nach Stellung des Ventilkörpers 6 ergebenden freien Strömungsquerschnitt im Regelventil 1 und damit den Durchfluss V durch das Regelventil 1.

Der Ventilkörper 6 ist mittels geeigneter Lager 16 drehbar im Ventilgehäuse 2 gelagert angeordnet. Zusätzlich können zur Abdichtung des Ventilkörpers 2 gegenüber dem Ventilgehäuse 2 noch geeignete Dichtelemente 17 angeordnet sein. Der Ventilkörper 6 ist drehfest mit einem Stellantrieb 13 verbunden. Der Stellantrieb 13 ist hier als Elektromotor 15 mit Winkelgetriebe 14 ausgebildet, wobei der Wellenausgang des Stellantriebs 13 über eine übliche Wellen-Naben-Verbindung mit dem Ventilkörper 6 verbunden ist. Über den Stellantrieb 13 kann der Ventilkörper 6 im Strömungskanal 5 um die Drehachse 7 verdreht werden. Die Art und Weise wie der Ventilantrieb 13 mit dem Ventilkörper 6 und dem Ventilgehäuse 2 verbunden ist, ist für die Erfindung aber nebensächlich. Grundsätzlich wäre es sogar möglich, anstelle des Stellantriebs 13, Mittel zum manuellen Verdrehen des Ventilkörpers 6 vorzusehen.

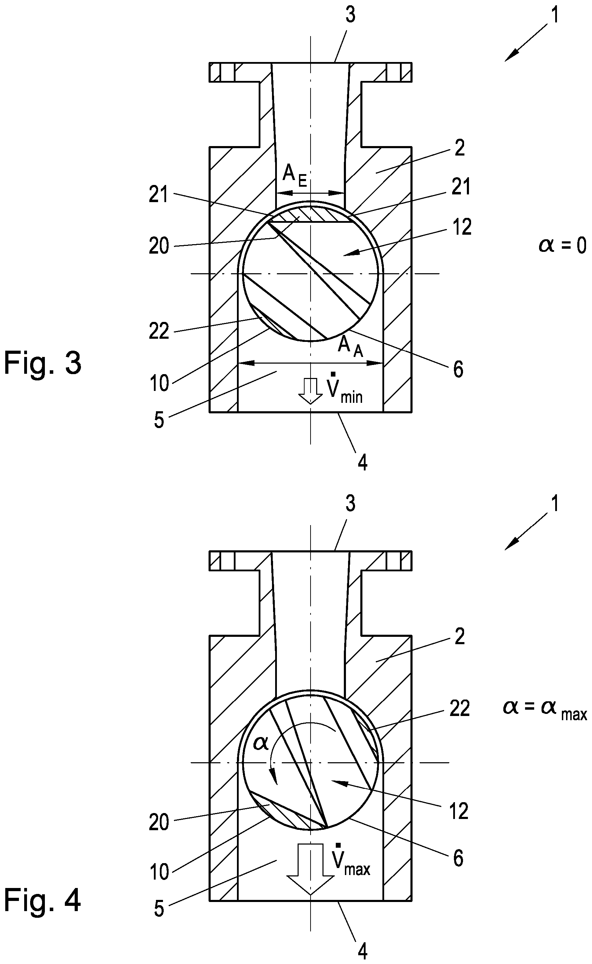

In den Figs.3 und 4 ist jeweils ein Längsschnitt A-A durch das Ventilgehäuse 2 dargestellt, wobei Fig.3 die geschlossen Stellung (0% offen) des Regelventils 1 und die Fig.4 die offen Stellung (100% offen) des Regelventils 1 darstellt. Dazwischen ergibt sich der Stellbereich des Regelventils 1. Durch die Ausnehmung 11 zur Ausbildung des Regelkanals 12 durch den Ventilkörper 6 bildet sich am Ventilkörper 6 radial außen über einen Teil des Umfanges des Ventilkörpers 6 ein sich axial erstreckender, zylindersegmentförmiger Verschlusssteg 20, der in der geschlossen Stellung (Fig.3) den Strömungskanal 5 des Regelventils 1 verschließt. Falls in der geschlossen Stellung des Regelventils 1 keine Leckage erwünscht ist, muss der Verschlusssteg 20 den Strömungskanal 5 vollständig schließen. Damit ist die geometrische Form des Verschlusssteges 20 an der Mantelfläche 10, zumindest die Breite des Zylindersegmentes, des Ventilkörpers 6 vorgegeben. In der Regel bildet sich durch die Ausnehmung 11 am Ventilkörper 6 auch eine Verbindungsbrücke 22 aus, die im Wesentlichen diametral gegenüber dem Verschlusssteg 20 angeordnet ist und die, wie der Verschlusssteg 20, die beiden die Mantelfläche 10 begrenzenden axialen Stirnflächen 18 des Ventilkörpers 6 verbindet. Diese Verbindungsbrücke 22 ist schon alleine aus Stabilitäts- und Festigkeitsgründen vorteilhaft für den Ventilkörper 6.

Der Zuströmquerschnitt A_{E} des Strömungskanal 5 unmittelbar vor dem Ventilkörper 6 ist kleiner als der Abströmquerschnitt A_{A} des Strömungskanal 5 unmittelbar nach dem Ventilkörper 6. Dadurch und durch die im Wesentlichen diametrale Anordnung der Verbindungsbrücke 22 ergibt sich ein großer Stellbereich des Regelventils 1. Der Ventilkörper 6 kann bei dieser Ausführung mit der Verbindungsbrücke 22 solange verdreht werden, bis die Verbindungsbrücke 22 in den Strömungskanal 5 am Eingang zum Ventilkörper 6 geschwenkt werden würde (Fig.4). Der Verschlusssteg 20 kann dabei in den Strömungskanal 5 geschwenkt werden, weil die Strömung an beiden Seiten des Verschlusssteges 20 vorbeifließen kann. Die Kontur 23 kann so gestaltet werden, dass sich beim Verdrehen des Verschlusssteges 20 durch den Strömungskanal 5 der Durchfluss V weiter linear erhöht oder erniedrigt (je nach Drehrichtung). Die in Fig.4 dargestellte Ausführung ermöglicht einen Stellbereich von ungefähr 180°.

Es ergibt sich aber noch ein wesentlicher Vorteil des erfindungsgemäßen Regelventils 1. Durch Austausch des Ventilkörpers 6 lässt sich das Regelventil 1 auf einfache Weise auf unterschiedliche Durchflüsse V und Arbeitsbereiche einstellen, was das Regelventil 1 sehr flexibel macht.

Speziell bei der Verwendung des Regelventils 1 bei einem hydrodynamischen Drehmomentenerzeuger ist es vorteilhaft, wenn eine gewisse Leckagemenge *V̇*ₘᵢₙ in der geschlossen Stellung eingestellt wird. Das kann beispielsweise so erreicht werden, dass, wie in Fig.3 dargestellt, der Verschlusssteg 20 zwar die gesamte Querschnittsfläche des Strömungskanals 5 abdeckt, aber im Bereich der Mantelfläche 10 radial zwischen Ventilkörper 6 und Ventilgehäuse 2 zumindest teilweise ein Radialspalt 21 vorgesehen ist, durch den Betriebsmittel in der geschlossen Stellung des Regelventils 1 strömen kann. Alternativ oder zusätzlich könnte der Verschlusssteg 20 auch so gestaltet sein, dass dieser in der geschlossen Stellung nicht die gesamte Querschnittsfläche des Strömungskanals 5 abdeckt, beispielsweise durch das Vorsehen von Ausschnitten, Bohrungen, usw.

Im Betrieb des hydrodynamischen Drehmomentenerzeugers kann das durchfließende Betriebsmittel auch stark erwärmt werden. Kommt es im Betrieb zu einem fehlerhaften, unbeabsichtigten Schließen des Regelventils 1, könnte das Betriebsmittel sehr stark erwärmt werden, was zu einem Überhitzen der Rotoren des hydrodynamischen Drehmomentenerzeugers führen kann. Das könnte den hydrodynamischen Drehmomentenerzeuger sogar beschädigen oder zerstören. Durch eine definierte Leckagemenge *V̇*ₘᵢₙ in der geschlossen Stellung kann das wirksam verhindert werden.

Wird die Leckagemenge *V̇*ₘᵢₙ durch einen Radialspalt 21 erreicht, erzielt man zusätzlich noch den Vorteil der Umspülung des drehbaren Ventilkörpers 6, wodurch die Gefahr der Kalkanlagerung oder der Anlagerung von Partikel am Ventilkörper 6 reduziert wird.

Wird der Ventilkörper 6 um einen Verdrehwinkel α verdreht (angedeutet durch den Pfeil in Fig.4) wird der Zustrom vom Betriebsmedium von der Einlassöffnung 3 zum Regelkanal 12 kontinuierlich geöffnet, womit sich der Durchfluss *V̇* durch das Regelventil 1 erhöht. Normalerweise wäre das Regelventil 1 vollständig geöffnet und der Durchfluss *V̇* maximal, wenn der Verschlusssteg 20 zur Gänze aus dem Strömungskanal 5 herausgeschwenkt wäre. Der Stellbereich wäre damit aber sehr eng. Außerdem würde sich dabei kein linearer Zusammenhang zwischen Durchfluss *V̇* und Verdrehwinkel α ergeben.

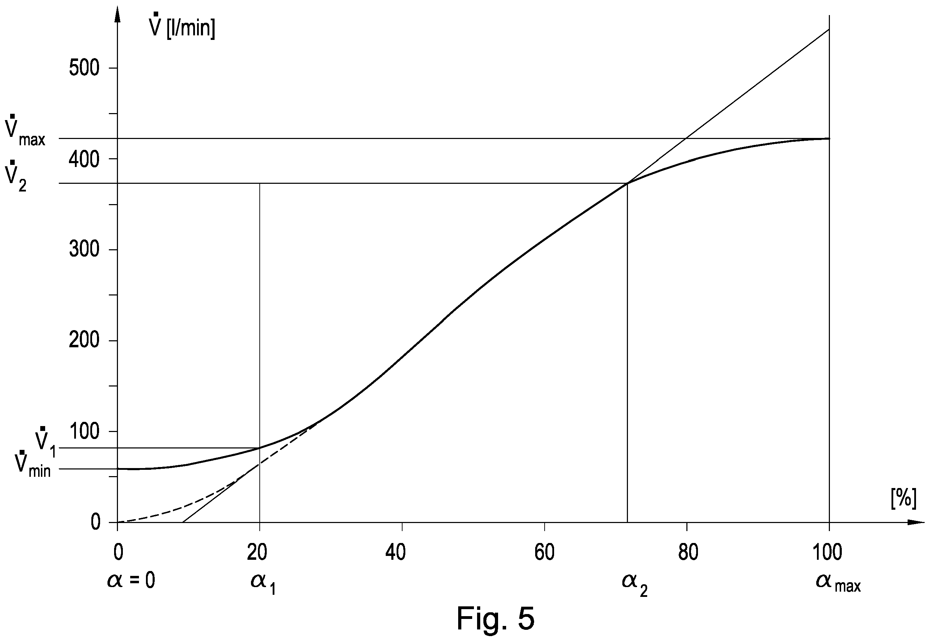

Um dem zu entgehen, wird der Regelkanal 12 derart ausgestaltet, dass sich über einen weiten Teil des Stellbereichs, also von einer Stellung α = α₁, die ungleich der geschlossen Stellung bei α=0 ist, bis zu einer Stellung α = α₂, die vorzugsweise kleiner der offen Stellung bei α=αₘₐₓ ist, der Durchfluss *V̇* linear erhöht, wie in Fig.5 in Form der Kennlinie Durchfluss *V̇* über Öffnung in Prozent dargestellt. Damit ergibt sich innerhalb des Stellbereichs ein linearisierter Arbeitsbereich des Regelventils 1 zwischen einem ersten Verdrehwinkel α₁ mit Durchfluss *V̇*₁ und einem zweiten Verdrehwinkel α₂ mit Durchfluss *V̇*₂*,* oder wie in Fig.5 dargestellt zwischen einer ersten Öffnung des Regelventils 1 in Prozent und einer zweiten Öffnung in Prozent, wobei 100% Öffnung der Stellung des Ventilkörpers 6 wie in Fig.4 entspricht, also bevor die Verbindungsbrücke 22 in den Strömungskanal 5 am Eingang geschwenkt wird.

In der geschlossen Stellung des Regelventils 1 ist in der dargestellten Kennlinie eine Leckagemenge *V̇*ₘᵢₙ vorgesehen. Ohne Leckagemenge *V̇*ₘᵢₙ würde sich in diesem Bereich in Fig.5 z.B. der strichlierte Kurvenlauf der Kennlinie ergeben. Unterhalb des gewünschten Arbeitsbereichs, also bei α< α₁, kann die Kennlinie nicht linear sein, kann aber auch ganz oder teilweise linear sein.

Der zweite Verdrehwinkel α₂ des Arbeitsbereiches muss nicht, kann aber, mit 100% Öffnung zusammenfallen, sondern liegt vorzugsweise unterhalb der vollständigen Öffnung des Regelventils 1. Der Bereich vom zweiten Verdrehwinkel α₂ bis zur vollständigen Öffnung mit maximalem Durchfluss *V̇*ₘₐₓ ist vorzugsweise ebenfalls mit linearer Kennlinie ausgeführt (wie in Fig.5 angedeutet), ebenfalls wieder durch entsprechende Gestaltung des Regelkanals 12. Allerdings muss dieser Bereich α>α₂ nicht unbedingt mit linearer Kennlinie ausgeführt sein, wie in Fig.5 dargestellt. Dieser Bereich α>α₂ stellt einen Überlastbereich dar, der in bestimmten Betriebssituationen des hydrodynamischen Drehmomentenerzeugers, z.B. bei Lastabwurf oder bei einer klassischen Überlast, abgerufen werden kann. Im Betrieb des Drehmomentenerzeugers kann es auch erforderlich sein, den Füllstand innerhalb des Drehmomentenerzeugers zu variieren, wozu die abfließende Betriebsmediummenge aus den Drehmomentenerzeuger variiert wird. Diese Variation wird in der Regel nicht über die zugeführte Betriebsmediummenge durchgeführt, sondern über die ausfließende Betriebsmediummenge, da diese mittels des Regelventils 1 wesentlich dynamischer verändert werden kann, insbesondere wenn die zufließende Menge an Betriebsmedium mit einem herkömmlichen Ventil oder mittels einer Pumpe geregelt wird, bei der die zufließende Betriebsmediummenge mit der mechanischen Trägheit behaftet ist. Der Bereich zwischen α₂ und αₘₐₓ (also 100% Öffnung) stellt somit eine Regelreserve dar, beispielsweise für das rasche Absenken des Füllstandes im Drehmomentenerzeuger, und muss nicht mehr unbedingt den linearen Anforderungen genügen.

Die Kennlinie in Fig.5 gilt für eine bestimmte Druckdifferenz, hier z.B. 0,05bar, zwischen Einlassöffnung 3 und Auslassöffnung 4 des Regelventils 1. Im Normalfall wird man für eine Regelung des Regelventils 1 eine Schar von Kennlinien für verschiedene Druckdifferenzen haben. Ebenso könnte noch ein möglicher Einfluss der Temperatur des Betriebsmediums auf die Kennlinie berücksichtigen werden, z.B. wieder durch entsprechende Kennlinien.

Die Gestalt des Regelkanals 12 kann beispielsweise ermittelt werden, indem ein optimaler Verlauf der Kontur 23 des Regelkanals 12, der die geforderte Linearität bei Verdrehen des Ventilkörpers 6 ergibt, berechnet wird, der dann iterativ optimiert werden kann, z.B. anhand von Messversuchen. Auch eine empirische Ermittlung der Gestalt der Ausnehmung 11 bzw. des Regelkanals 12 wäre denkbar. Grundsätzlich ist ein Fachmann auf dem Gebiet der Hydrodynamik in der Lage die Gestalt der Ausnehmung 11 zu ermitteln. Aufgrund der geforderten linearen Charakteristik der Durchströmung wird man auf eine irgendwie im Querschnitt enger werdende Kontur 23 des Regelkanals 12 kommen, wie in den Figuren angedeutet.

Die Auslegung des Ventilkörpers 6 wie in Fig.2 dargestellt erfolgte beispielsweise zuerst anhand der Vorgabe eines linearen Verlaufes der Kennlinie in einem gewünschten Arbeitsbereich (α₁ bis α₂) von ca. 2/3 des Stellbereiches (α=0 bis αₘₐₓ). Damit wurde unter Zugrundelegung von existierenden theoretischen hydrodynamischen Zusammenhängen eine Soll-Ausnehmung als Funktion des Verdrehwinkels α berechnet, mit den Randbedingungen einer gewünschten Leckagemenge *V̇*ₘᵢₙ in der geschlossen Stellung bei α=0° und der vollständigen Öffnung des verfügbaren geometrischen Querschnittes des Strömungskanals 5 in der offen Stellung bei αₘₐₓ (was dem Abströmquerschnitt A_{A} entspricht). Die sich durch die Form des Strömungskanales 5 ergebende theoretische Sollfunktion des Öffnungsverlaufes der Ausnehmung 11 zur Erreichung der gewünschten Kennlinie wurde durch einen Strömungsversuch verifiziert und die Abweichung vom theoretisch bestimmten Verlauf ermittelt. Für den eingesetzten rechteckförmige Querschnitt des Strömungskanales 5 wurde z.B. eine Potenzfunktion A(α) = k* α ^{2/5} + A(0) angesetzt. Dabei bezeichnet A den sich ergebenden Strömungsquerschnitt des Regelkanals 12 bei einem Verdrehwinkel α und k einen Skalierungsparameter welcher die Funktion auf die maximal mögliche Öffnungsfläche skaliert. Für die Anwendung dieses Zusammenhanges auf einen zylindrischen Ventilkörper 6 und einen Strömungskanal 5 mit rechteckförmigem Strömungsquerschnitt S ist eine Abweichung von diesem theoretischen Öffnungsverlauf des Regelkanals 12 zu erwarten. Diese Abweichung wurde durch den Versuchsaufbau anhand von Versuchen ermittelt und die optimale Form der Kontur 23 des Regelkanals 12 in mehreren Adaptionsstufen gefunden.

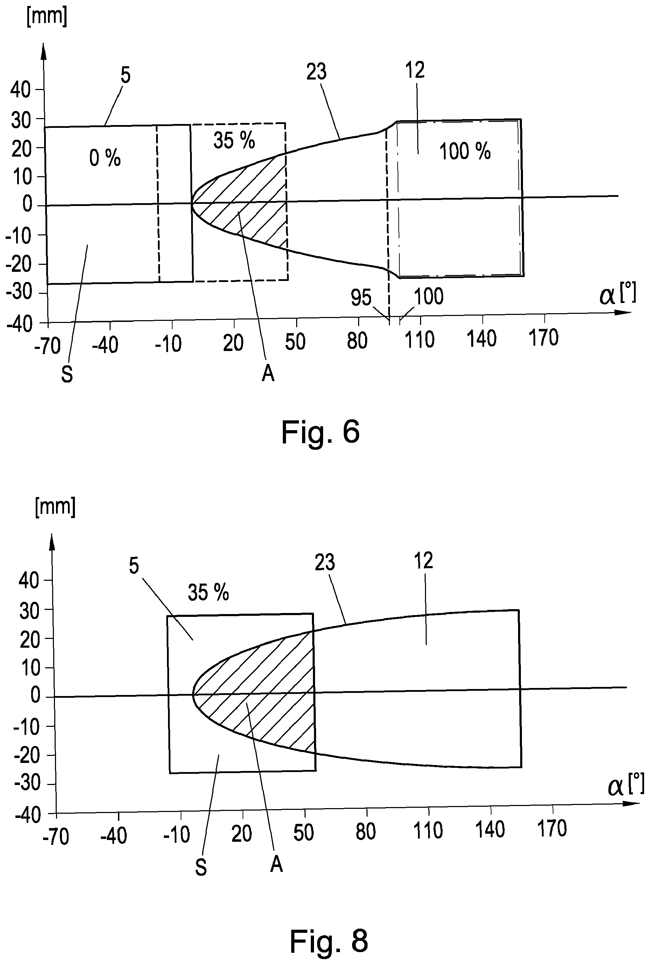

In Fig.6 ist die Mantelfläche 10 des Ventilkörpers 6 abgewickelt dargestellt, wobei der Einfachheit halber nur die Kontur 23 des Regelkanals 12 über den Verdrehwinkel α und der Strömungsquerschnitt S des Strömungskanals 5 in verschiedenen Öffnungsstellungen des Regelventils 1 dargestellt sind. Strichliert ist in Fig.6 die 35% Öffnung und strichpunktiert die 100% Öffnung des Regelventils 1 dargestellt. In diesem Ausführungsbeispiel ist ein Stellbereich (α=0 bis αₘₐₓ) von ca. 170° vorgesehen. Man erkennt, dass sich in verschiedenen Öffnungsstellungen gemäß der Kontur 23 des Regelkanals 12 verschiedene Strömungsquerschnitte A ergeben. Die Kontur 23 folgt hier im Wesentlichen einer Potenzfunktion. Der Sprung bei ca. 95° bezeichnet den Verdrehwinkel α₂, ab dem von der linearen Kennlinie abgewichen wird (vgl. Fig.5). Dieser Öffnungsverlauf bewirkt die lineare Kennlinie innerhalb des Arbeitsbereiches (α₁ bis α₂), wie oben erläutert.

In Fig.7 ist eine alternative Ausgestaltung des Ventilkörpers 6 dargestellt. Hier sind an den axialen Enden der Mantelfläche 10, radial aus der Mantelfläche 10 herausstehende Umfangsstege 24 angeordnet, die den Radialspalt 21 zwischen Ventilkörper und Ventilgehäuse (Fig.3, 4) im Bereich der Umfangsstege 24 im Wesentlichen verschließen, um die Leckagemenge *V̇*ₘᵢₙ gezielt über die Mantelfläche 10 des Ventilkörpers 6 zu leiten. Unter Umständen kann aber auch nur ein solcher Umfangssteg 24 ausreichend sein. Solche Umfangsstege 24 können auch bei einer Ausgestaltung nach Fig.2 vorgesehen sein. Außerdem ist in der Verbindungsbrücke 22 eine Ausnehmung 25 vorgesehen, durch die zwei schmale Verbindungsstege 26 ausgebildet werden. Durch die Ausnehmung 25 ergibt sich ein verbessertes Ausströmverhalten des Betriebsmediums aus dem Ventilkörper 6 in den Bereichen, in denen die Verbindungsbrücke 22 durch den Strömungskanal 5 am Ausgang geschwenkt wird, da das Betriebsmedium weniger umgelenkt wird und es zu geringeren Verwirbelungen kommt.

In Fig.8 ist wieder die Mantelfläche 10 des Ventilkörpers 6 nach Fig.7 abgewickelt dargestellt. Die Kontur 23 des Regelkanal 12 folgt hier einer elliptischen Funktion (Ellipsengleichung) bis zur offen Stellung bei 100% (amax). Damit ergibt sich eine lineare Kennlinie bis nahe zur 100% offen Stellung des Ventilkörpers 6.

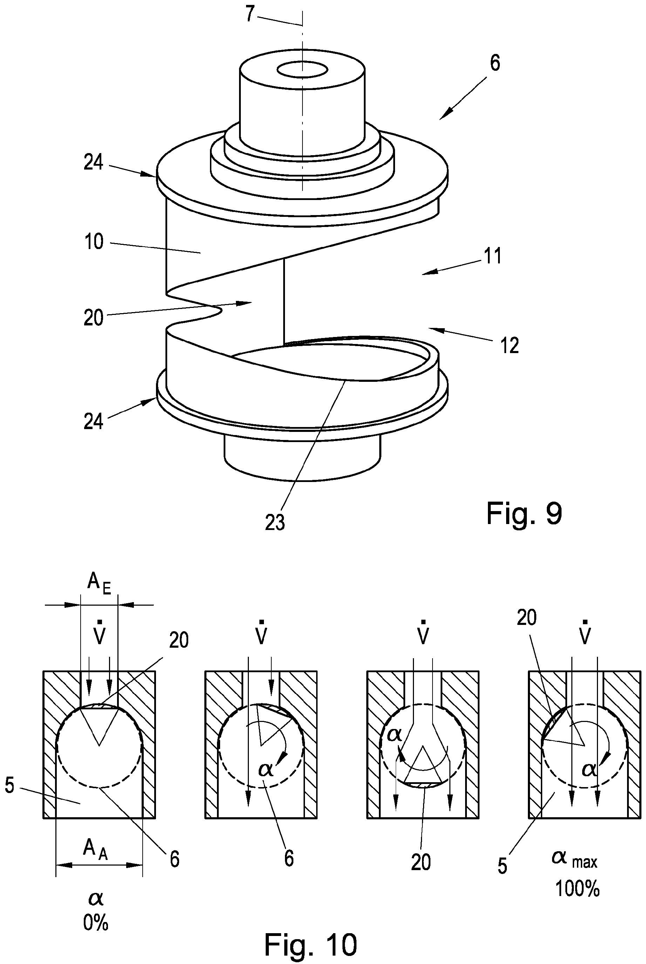

Es ist aber auch möglich, einen Ventilkörper 6 ohne Verbindungsbrücke 22 zu verwenden, wie in Fig.9 dargestellt. In dieser Ausgestaltung wird durch die Ausnehmung 11 mit der Kontur 23 bis auf den verbleibenden Verschlusssteg 20 der Ventilkörper 6 zur Ausbildung des Regelkanals 12 vollständig ausgeschnitten. Von der Mantelfläche 10 des Ventilkörpers bleibt somit nur der den Verschlusssteg 20 begrenzende Abschnitt übrig. Die Umfangsstege 24 können dabei auch weggelassen werden, oder nur auf einer Seite angeordnet werden. Ein solcher Ventilkörper 6 hätte den Vorteil, dass sich der mögliche Stellbereich noch deutlich vergrößern ließe, wie anhand der Fig.10, in der der Ventilkörper 6 im Strömungskanal 5 in verschiedenen Stellungen des Stellbereichs von α=0 bis αₘₐₓ dargestellt ist, erläutert wird. In der geschlossen Stellung bei α=0 verschließt der Verschlusssteg 20 den Strömungskanal 5 am Eingang zum Ventilkörper 6. Auch hier könnte wieder wie oben beschrieben ein minimaler Durchfluss als Leckagemenge *V̇*ₘᵢₙ in der geschlossenen Stellung vorgesehen sein. Wird der Ventilkörper 6 verdreht (in diesem Fall im Uhrzeigersinn), wird der Verschlusssteg 20 aus dem Strömungsbereich geschwenkt und es stellt sich in Abhängigkeit vom Drehwinkel α ein Durchfluss *V̇* ein. Wird der Ventilkörper 6 weitergedreht, schwenkt der Verschlusssteg 20 ab einem bestimmten Drehwinkel α in den Strömungskanal 5 am Ausgang vom Ventilkörper 6 ein. Da der Abströmquerschnitt A_{A} größer als der Zuströmquerschnitt A_{E} ist, kann die Ausnehmung 11, bzw. deren Kontur 23, des Ventilkörpers 6 in diesem Bereich so gestaltet sein, dass bei Weiterdrehen des Ventilkörpers 6 der Durchfluss *V̇* nicht verringert wird, sondern im Gegenteil, weiter linear erhöht wird, da die Strömung an beiden Seiten am Verschlusssteg 20 vorbeiströmen kann. Der Ventilkörper 6 kann so weit verdreht werden, bis der Verschlusssteg 20 nach einer fast vollständigen Umdrehung des Ventilkörpers 6 wieder in den Strömungskanal 5 am Eingang geschwenkt werden würde. Damit kann ein sehr weiter Verstellbereich realisiert werden, der im Wesentlichen durch die winkelmäßige Erstreckung des Verschlusssteges 20 vorgegeben ist (αₘₐₓ = 360° - α_{V}). Um den gewünschten linearen Zusammenhang zwischen Ventilstellung α und Durchfluss *V̇* zu realisieren, zumindest zwischen dem Arbeitsbereich (α₁ bis α₂), erstreckt sich die Kontur 23 der Ausnehmung 11 über einen größeren Umfangsbereich wie in Fig.9 angedeutet.

Dieser weite Stellbereich könnte auch durch eine in Umfangsrichtung gesehen sehr schmalen Verbindungsbrücke 22, im Wesentlichen diametral gegenüber dem Verschlusssteg 20, realisiert werden, da eine solche schmale Verbindungsbrücke 22 den Durchfluss *V̇* kaum beeinflusst. Das gilt im Wesentlichen auch für eine Ausführung nach der Fig.7, wenn die Verbindungsstege 26 in Umfangsrichtung gesehen sehr schmal gemacht werden. Eine weitere Möglichkeit wäre es, die Verbindungsbrücke 22 weiter in das Zentrum des Ventilkörpers 6 zu rücken, da das die Strömung am Austritt aus dem Ventilkörper 6 nicht oder nur unwesentlich beeinflusst. Gegebenenfalls könnte man die Wirkung der Verbindungsbrücke 22, bzw. der Verbindungsstege 26, auf den Durchfluss *V̇* auch durch eine entsprechende Gestaltung der Kontur 23 ausgleichen.

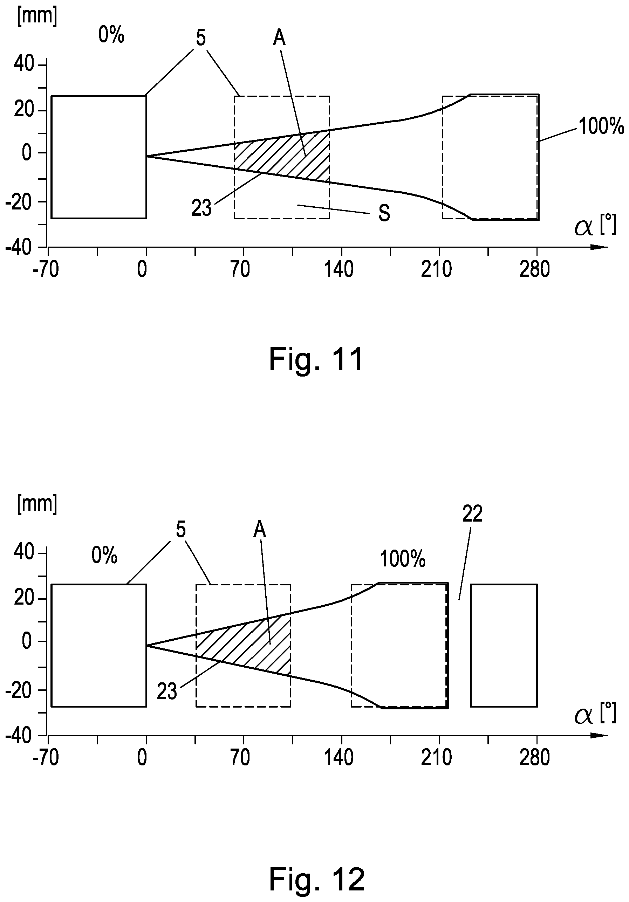

In Fig.11 ist die Mantelfläche 10 des Ventilkörpers 6 nach Fig.9 wieder abgewickelt dargestellt. Die Kontur 23 des Regelkanal 12 folgt hier einer Potenzfunktion oder einer elliptischen Funktion (Ellipsengleichung) bis zur offen Stellung bei 100% (αₘₐₓ bei ungefähr 300° Verdrehwinkel). Damit ergibt sich eine lineare Kennlinie bis nahe zur 100% offen Stellung des Ventilkörpers 6.

In Fig.12 ist der Ventilkörper 6 aus Fig.9 mit einer Verschlussbrücke 22 abgewickelt dargestellt. Hier stellt sich die 100% offen Stellung schon bei einem Verdrehwinkel von ungefähr 220° ein. Der Ventilkörper 6 könnte aber auch noch weiterverdreht werden bis zu einem Verdrehwinkel von ca. 280°. Dieser nicht lineare Bereich könnte für eine maximale Öffnung des Regelventils 1 und damit für einen maximalen Durchfluss genutzt werden V̇ₘₐₓ. Die Breite der Verschlussbrücke 22 könnte aber durch die Kontur 23 auch ausgeglichen werden, womit sich ein linearer Verstellbereich bis zum maximalen Verdrehwinkel, hier ca. 280° ergeben würde.

Eine wesentliche Eigenschaft des erfindungsgemäßen Regelventils 1 ergibt sich somit daraus, dass der Abströmquerschnitt A_{A} vom Ventilkörper 6 größer ist als der Zuströmquerschnitt A_{E} zum Ventilkörper, sodass der Verschlusssteg 20 beim Verdrehen des Ventilkörpers 6 durch den ausgangsseitigen Strömungskanal 5 geschwenkt werden kann. Durch Gestaltung der Ausnehmung 11, bzw. der Kontur 23, des Ventilkörpers 6 kann erreicht werden, dass dabei der Durchfluss *V̇* durch das Regelventils 1 nicht verringert wird, sondern im Gegenteil, weiter linear erhöht oder verringert wird (je nach Drehrichtung), da die Strömung an beiden Seiten am Verschlusssteg 20 kontrolliert vorbeiströmen kann (Fig. 10).

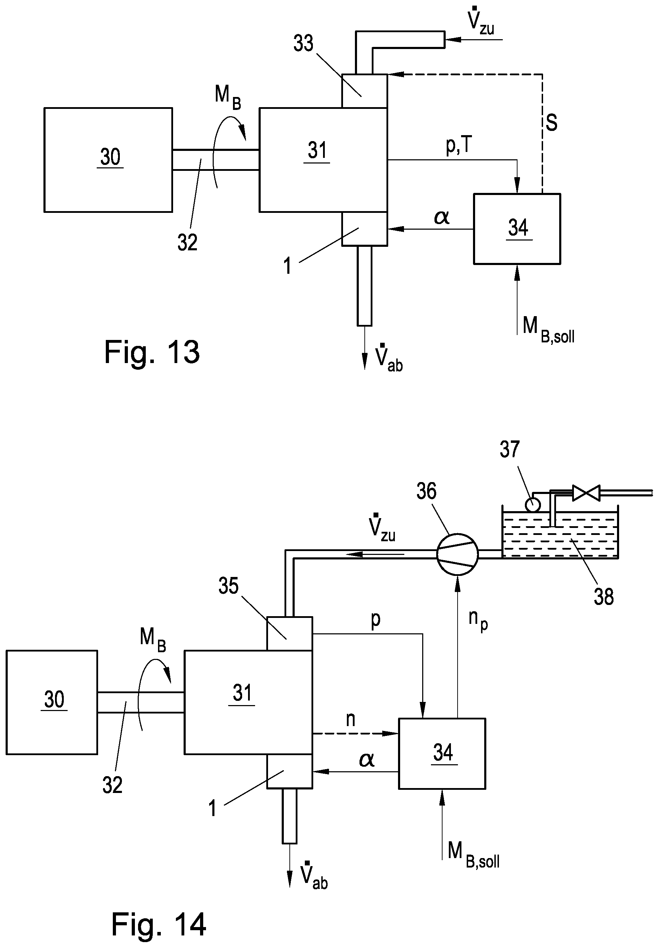

In Fig.13 ist noch eine beispielhafte Verwendung eines hydrodynamischen Drehmomentenerzeugers 31 in einem Prüfstand, wobei hier ein erfindungsgemäßes Regelventil 1 am Ausfluss des hydrodynamischen Drehmomentenerzeugers 31 verwendet wird. Der hydrodynamische Drehmomentenerzeuger 31 ist mit einer Verbindungswelle 32 mit einem Prüfling 30, z.B. ein Verbrennungsmotor oder ein Antriebsstrang, verbunden und erzeugt ein Belastungsdrehmoment M_{B}. Das Belastungsdrehmoment M_{B} wird durch Regelung des Durchflusses *V̇* eines Betriebsmediums durch den hydrodynamischen Drehmomentenerzeuger 31, mit dem ein Pegelstand im Drehmomentenerzeuger eingestellt wird, eingestellt. Hierzu ist am Einlass des Drehmomentenerzeugers 31 ein Einlassventil 33 und am Auslass das erfindungsgemäße Regelventil 1 angeordnet. Das Einlassventil 33 kann natürlich auch als erfindungsgemäßes Regelventil 1 ausgeführt sein. Das Einlassventil 33 regelt den Zufluss *V̇_{zu}* und das Regelventil 1 den Abfluss *V̇_{ab}* von Betriebsmedium, um im Drehmomentenerzeuger 31 einen gewünschten Pegelstand des Betriebsmediums zu erhalten, der letztendlich das gewünschte Belastungsdrehmoment M_{B} bewirkt.

Hierzu kann eine Regeleinheit 34 vorgesehen sein, der ein einzustellendes Soll-Belastungsmoment M_{B,soll} vorgegeben wird, z.B. von einer übergeordneten Steuereinrichtung wie einer Prüfstands-Steuereinrichtung. Die Regeleinheit 34 kann weitere Messgrößen des Drehmomentenerzeuges 31 erfassen, insbesondere den Druck p am Zulauf des Drehmomentenerzeugers 31 und eine Temperatur T des Betriebsmediums, und ermittelt daraus anhand eines implementierten Regelalgorithmus eine einzustellende Stellgröße α für das Regelventil 1 (bzw. den Stellantrieb 13 des Regelventils 1), und eventuell auch eine Stellgröße S für das Einlassventil 33 für die zugeführte Wassermenge.

Mit Fig.14 wird noch eine alternative Regelung des Drehmomentenerzeugers 31 beschrieben. Am Auslass des Drehmomentenerzeugers 31 ist wiederum das erfindungsgemäße Regelventil 1 zum Einstellen der abfließenden Menge *V̇_{ab}* an Betriebsmedium angeordnet. Es kann für diese Regelung aber auch ein anderes geeignetes Regelventil, insbesondere auch ein nicht lineares Regelventil, am Ausgang angeordnet werden. Am Einlass des Drehmomentenerzeugers 31 ist aber nun kein Einlassventil vorgesehen. Die dem Drehmomentenerzeuger 31 zugeführte Menge *V̇_{zu}* an Betriebsmedium wird hier mittels einer drehzahlgeregelten Pumpe 36 geregelt, welche einen definierten Druckverlauf am Eingang des Drehmomenterzeugers 31 sicherstellt. Dazu kann der Druck am Eingang des Drehmomentenerzeugers 31 mittels eines Drucksensors 35 gemessen werden. Der Druck ist deshalb wichtig, weil die Kennlinie des Regelventils 1 druckabhängig ist, wie oben beschrieben. Die Regelung der Drehzahl n_{P} eine drehzahlgeregelte Pumpe 36 ermöglicht eine präzisere und auch schnellere Steuerung des Zulaufes *V̇_{zu}* von Betriebsmedium verglichen mit üblicherweise ausgeführten Druckreglern oder Regelventilen am Einlass. Durch die Speisung der Pumpe 36 aus einem Zwischentank 38 erreicht man auch eine Unabhängigkeit gegenüber kurzzeitigen Schwankungen des Druckes in einem Leitungsnetz für das Betriebsmedium, wie z.B. das Leitungsnetz der Wasserversorgung. Der Füllstand im Zwischentank 38 kann dabei einfach z.B. durch ein Schwimmerventil 37 gesteuert werden, kann jedoch auch mittels anderer bekannter Verfahren im erforderlichen Bereich gehalten werden.

Der hydrodynamische Drehmomenterzeuger 31 kann auch eine Abhängigkeit in der Drehzahl n des Drehmomentenerzeugers 31 aufweisen, welche im implementierten Regelalgorithmus berücksichtigt werden kann, wie in Fig.10 angedeutet.

## Patentansprüche

1. Regelventil mit einem Ventilgehäuse (2) mit einer Einlassöffnung (3) und einer Auslassöffnung (4), die durch einen Strömungskanal (5) verbunden sind, wobei im Strömungskanal (5) ein verdrehbar gelagerter zylindrischer Ventilkörper (6) angeordnet ist und die Drehachse (7) des Ventilkörpers (6) normal zur Längsachse (8) des Strömungskanals (5) angeordnet ist und wobei im Ventilkörper (6) eine Ausnehmung (11) vorgesehen ist, die einen durch den Ventilkörper (6) durchgehenden Regelkanal (12) ausbildet, der die Mantelfläche (10) des Ventilkörpers (6) schneidet, und am Ventilkörper (6) ein Verschlusssteg (20) ausgebildet ist, der in der geschlossen Stellung des Regelventils (1) den Strömungskanal (5) zumindest zum Teil verschließt, und der Regelkanal (12) geformt ist, um bei Verdrehung des Ventilkörpers (6) zwischen einer ersten, von der geschlossen Stellung verschiedenen Ventilstellung (α₁) und einer zweiten Ventilstellung (α₂) mit einem größeren Durchfluss (*V̇*) als in der ersten Ventilstellung (α₁) einen im Wesentlichen linearen Zusammenhang zwischen Ventilstellung (α) und Durchfluss (*V̇*) zu erzielen, **dadurch gekennzeichnet, dass** ein Zuströmquerschnitt (A_{E}) zum Ventilkörper (6) kleiner ist, als ein Abströmquerschnitt (A_{A}) vom Ventilkörper (6), sodass der Verschlusssteg (20) beim Verdrehen des Ventilkörpers (6) durch den Strömungskanal (5) drehbar ist und dabei der Durchfluss (*V̇*) beim Verdrehen weiter linear zu- oder abnimmt.

2. Regelventil nach Anspruch 1, **dadurch gekennzeichnet, dass** am Ventilkörper (6) diametral gegenüber dem Verschlusssteg (20) eine Verbindungsbrücke (22) angeordnet ist.

3. Regelventil nach Anspruch 2, **dadurch gekennzeichnet, dass** in der Verbindungsbrücke (22) eine Ausnehmung (25) vorgesehen ist.

4. Regelventil nach einem der Ansprüche 1 bis 3, **dadurch gekennzeichnet, dass** der Ventilkörper (6) zur Ausbildung eines durchströmbaren Radialspaltes (21) im Bereich der Mantelfläche (10) zumindest teilweise radial beabstandet vom Ventilgehäuse (2) angeordnet ist.

5. Regelventil nach Anspruch 4, **dadurch gekennzeichnet, dass** an zumindest einem axialen Ende der Mantelfläche (10) ein aus der Mantelfläche (10) radial hervortretender Umfangssteg (24) angeordnet ist.

6. Hydrodynamischer Drehmomentenerzeuger mit einem Regelventil (1) nach einem der Ansprüche 1 bis 5, wobei das Regelventil (1) am Auslass des Drehmomentenerzeugers (31) angeordnet ist, um die vom Drehmomentenerzeuger (31) abfließende Menge (*V̇_{ab}*) an Betriebsmedium einzustellen.

7. Verfahren zur Regelung eines hydrodynamischen Drehmomentenerzeugers (31) mit dem ein Belastungsdrehmoment (M_{B}) des Drehmomentenerzeugers (31) mit einem Regelventil (1) nach einem der Ansprüche 1 bis 5 eingestellt wird, wobei das Regelventil (1) am Auslass der Drehmomentenerzeugers (31) angeordnet wird, **dadurch gekennzeichnet, dass** am Einlass des Drehmomentenerzeugers (31) mittels einer drehzahlgeregelten Pumpe (36) eine dem Drehmomentenerzeuger (31) zugeführte Menge (*V̇_{zu}*) an Betriebsmedium geregelt wird und mittels des Regelventils (1) die vom Drehmomentenerzeuger (31) abfließende Menge (*V̇_{ab}*) an Betriebsmedium geregelt wird, sodass sich im Drehmomentenerzeuger (31) ein Pegelstand an Betriebsmedium einstellt, der das gewünschte Belastungsdrehmoment (M_{B}) bewirkt.

## Claims

1. A control valve having a valve housing (2) with an inlet opening (3) and an outlet opening (4) which are connected by a flow channel (5), wherein a rotatably mounted cylindrical valve body (6) is arranged in the flow channel (5) and the axis of rotation (7) of the valve body (6) is arranged normally with respect to the longitudinal axis (8) of the flow channel (5), and wherein, in the valve body (6), a cutout (11) is provided, which forms a continuous control channel (12) which runs through the valve body (6) and intersects the lateral surface (10) of the valve body (6), and a sealing land (20), which in the closed position of the control valve (1) at least partially seals the flow channel (5), is formed on the valve body (6), and the control channel (12) is formed in order to achieve a substantially linear relationship between valve position (α) and flow (*V̇*) when the valve body (6) is rotated between a first valve position (α₁), which differs from the closed position, and a second valve position (α₂) with a larger flow (*V̇*) than in the first position (α₁), **characterized in that** an inflow cross section (A_{E}) to the valve body (6) is smaller than an outflow cross section (A_{A}) from the valve body (6), thus enabling the sealing land (20) to be rotated through the flow channel (5) when the valve body (6) is rotated and in doing so the flow (*V̇*) further increases or decreases linearly during the rotation.

2. The control valve according to claim 1, **characterized in that** a connecting bridge (22) is arranged on the valve body (6) diametrically opposite the sealing land (20).

3. The control valve according to claim 2, **characterized in that** a cutout (25) is provided in the connecting bridge (22).

4. The control valve according to one of claims 1 to 3, **characterized in that** the valve body (6) is arranged at least partially radially spaced apart from the valve housing (2) to form a radial gap (21) in the region of the lateral surface (10) through which medium can flow.

5. The control valve according to claim 4, **characterized in that** a circumferential land (24), which projects radially out of the lateral surface (10), is provided at least at one axial end of the lateral surface (10).

6. A hydrodynamic torque generator having a control valve (1) according to one of claims 1 to 5, wherein the control valve (1) is arranged at the outlet of the torque generator (31) in order to adjust the amount (*V̇_{ab}*) of operating medium flowing from the torque generator (31).

7. A method for controlling a hydrodynamic torque generator (31) with which a load torque (M_{B}) of the torque generator (31) is set by means of a control valve (1) according to one of claims 1 to 5, wherein the control valve (1) is arranged at the outlet of the torque generator (31), **characterized in that** an amount (*V̇_{zu}*) of operating medium which is fed to the torque generator (31) is controlled at the inlet of the torque generator (31) by means of a speed-controlled pump (36), and the amount (*V̇_{ab}*) of operating medium flowing from the torque generator (31) is controlled by means of the control valve (1), so that a level of operating medium which brings about the desired load torque (M_{B}) is adjusted in the torque generator (31).

## Revendications

1. Soupape de réglage comportant un boîtier de soupape (2) doté d'une ouverture d'entrée (3) et d'une ouverture de sortie (4) reliées par un conduit d'écoulement (5), un corps de soupape cylindrique (6) monté en rotation étant disposé dans le conduit d'écoulement (5), et l'axe de rotation (7) du corps de soupape (6) étant disposé perpendiculairement à l'axe longitudinal (8) du conduit d'écoulement (5), et un évidement (11) étant prévu dans le corps de soupape (6), lequel évidement forme un conduit de réglage (12) qui traverse le corps de soupape (6), lequel conduit de réglage coupe la surface d'enveloppe (10) du corps de soupape (6), et une traverse de fermeture (20) étant formée au niveau du corps de soupape (6), laquelle traverse de fermeture ferme au moins partiellement le conduit d'écoulement (5) en position fermée de la soupape de réglage (1), et le conduit de réglage (12) étant formé pour obtenir une relation sensiblement linéaire entre la position de soupape (α) et le débit (*V̇*) lors de la rotation du corps de soupape (6) entre une première position de soupape (α₁) différente de la position fermée et une seconde position de soupape (α₂) présentant un débit supérieur (*V̇*) à celui de la première position de soupape (α₁), **caractérisée en ce qu'**une section transversale d'écoulement d'alimentation (A_{E}) vers le corps de soupape (6) est plus petite qu'une section transversale d'écoulement de sortie (A_{A}) du corps de soupape (6), de sorte que la traverse de fermeture (20) puisse tourner à travers le conduit d'écoulement (5) lors de la rotation du corps de soupape (6), et ainsi, le débit (*V̇*) augmente ou diminue de manière davantage linéaire lors de la rotation.

2. Soupape de réglage selon la revendication 1, **caractérisée en ce qu'**un pont de liaison (22) est disposé de façon diamétralement opposée à la traverse de fermeture (20) au niveau du corps de soupape (6).

3. Soupape de réglage selon la revendication 2, **caractérisée en ce qu'**un évidement (25) est prévu dans le pont de liaison (22).

4. Soupape de réglage selon l'une des revendications 1 à 3, **caractérisée en ce que** le corps de soupape (6) est disposé dans la zone de la surface d'enveloppe (10) à distance au moins partiellement radialement du corps de soupape (2) pour former une fente radiale (21) pouvant être traversée par un fluide.

5. Soupape de réglage selon la revendication 4, **caractérisée en ce qu'**une traverse circonférentielle (24) faisant saillie radialement à partir de la surface d'enveloppe (10) est disposée à au moins une extrémité axiale de la surface d'enveloppe (10).

6. Générateur de couple hydrodynamique comportant une soupape de réglage (1) selon l'une des revendications 1 à 5, la soupape de réglage (1) étant disposée au niveau de la sortie du générateur de couple (31) pour régler la quantité (*V̇*_{ab}) de fluide de fonctionnement qui s'écoule du générateur de couple (31).

7. Procédé de réglage d'un générateur de couple hydrodynamique (31) à l'aide duquel un couple de charge (MB) du générateur de couple (31) comportant une soupape de réglage (1) est réglé selon l'une des revendications 1 à 5, la soupape de réglage (1) étant disposée au niveau de la sortie du générateur de couple (31), **caractérisé en ce qu'**au niveau de l'entrée du générateur de couple (31), une quantité (*V̇*_{zu}) de fluide de fonctionnement fournie au générateur de couple (31) est réglée au moyen d'une pompe à vitesse de rotation régulée (36) et la quantité (*V̇*_{ab}) de fluide de fonctionnement s'écoulant du générateur de couple (31) est réglée au moyen de la soupape de réglage (1), de sorte qu'un niveau de fluide de fonctionnement se règle dans le générateur de couple (31), lequel niveau de fluide de fonctionnement agit sur le couple de charge (M_{B}) souhaité.
